# EUROPEAN PATENT SPECIFICATION

(11) **EP 0 683 846 B1**
(45) Date of publication and mention of the grant of the patent: **02.08.2000**
(21) Application number: 93913638.8
(22) Date of filing: 25.05.1993
(51) Int. Cl.: E21B 43/01, B63B 21/50

(54) **A SYSTEM FOR USE IN OFFSHORE PETROLEUM PRODUCTION**
EIN SYSTEM ZUR VERWENDUNG BEI DER ERDÖLGEWINNUNG AUF SEE
SYSTEME UTILISE POUR LA PRODUCTION DE PETROLE SOUS-MARIN

(30) Priority: 25.05.1992 NO 922044
(43) Date of publication of application: 29.11.1995
(73) Proprietor: DEN NORSKE STATS OLJESELSKAP A.S., 4001 Stavanger (NO)
(72) Inventor: FJELL, Knut, Harry, N-4362 Vigrestad (NO); ODLAND, Jonas, N-4300 Sandnes (NO)
(74) Representative: W.P. THOMPSON & CO.
(86) International application number: NO9300082
(87) International publication number: WO9324733

(56) References cited:
- NO-B- 160 294
- NO-B- 164 968
- NO-B- 167 906
- SE-B- 457 208

## Description

The invention relates to a system for use in offshore oil and gas production from production wells on the sea bed, comprising a submerged buoy having an outer buoyancy member which is arranged for introduction and releasable fastening in a submerged, downwardly open receiving space in a vessel, and a central member which is rotatably mounted in the outer member and is anchored to the sea bed and is connected to at least one transfer line extending from a respective production well up to the buoy, a shaft extending between the receiving space and the deck of the vessel.

A system of the above-mentioned type, for use in buoy loading and unloading, is disclosed in the international patent application No. PCT/NO92/00054. In such systems the submerged buoy forms a collecting point for one or more flexible risers and umbilical cables from e.g. a production system at the sea bed or an oil-delivering conduit from a production unit. The buoy is adapted to be raised and fastened in the receiving space in the vessel in question, to establish a transport system for the petroleum products from said system to holds in the vessel.

When a buoy of the introductorily stated type is secured in the receiving space in a vessel, the vessel is rigidly fastened to the outer buoyancy member of the buoy and is rotatable about the central member of the buoy which is anchored to the sea bed by means of a suitable mooring system. Thus, the buoy itself constitutes a turning body or turret about which the vessel is allowed to turn under the influence of wind, waves and water currents.

This buoy structure involves a number of substantial advantages in relation to previously known buoy loading systems. The central member of the buoy has a small diameter and a small mass, so that there is obtained a correspondingly small diameter of the turning body. i.e. the outer buoyancy member of the buoy, and therewith a small rotary mass and a small rotational resistance. Connection and disconnection between vessel and buoy can be carried out in a simple and quick manner, even in bad weather with relatively high waves. Further, the buoy may remain connected to the vessel in all weathers, a quick disconnection being able to be carried out if a weather limitation should be exceeded.

In a vessel which is adapted for use with the buoy structure mentioned above, the receiving space and the shaft arranged thereabove suitably are arranged in the bow portion of the vessel, as shown in the above-mentioned International patent application. This makes possible a relatively simple and cheap rebuilding of existing vessels for adaptation to such a buoy loading system, of ruse as shuttle tankers. The combination of a submerged receiving space and a shaft which extends between the receiving space and the deck of the vessel, in addition makes possible a system giving a high security in operation and a small risk for contaminating spills.

For a further description of the buoy structure mentioned above and of a vessel of the above-mentioned type, reference may also be made to the International patent application nos. PCT/NO92/00055 and PCT/NO92/00056.

DE 3 344 116 shows an anchoring and transfer system for anchoring of a tanker and transfer of media from a borehole to the ship, comprising a submerged buoy 10 which is permanently connected with a column 13 which extends upwards into the hull of the ship and is rotatably mounted in a sleeve or shaft 4 in the hull, so that the ship is able to turn about the axis 3 of the sleeve. A transfer line 21 is carried through a central opening in the buoy 10 and upwards through the sleeve 13 to the deck of the ship. Means are provided for airtight closing of the sleeve 13, so that this can be filled with pressurized air to lower the water level in the sleeve, so as to make the lower hearing 6 for the sleeve accessible. In addition to the lower bearing 6, there is an upper bearing 5 for the mounting of the column 13 in the sleeve or shaft 4.

As regards offshore oil and gas production by means of production vessels, there are known different solutions, i.a. of the type which is based on a submerged bottom-anchored buoy and a receiving space arranged in the ship in the form of a moonpool which e.g. contains a tuning cylinder or turret for reception and mounting of the buoy. It is common to the known systems that they are relatively expensive, mainly because of large dimensions of the turning cylinder and the system as a whole. This results in that production vessels according to the prior art are not economically and practically usable in connection with minor or marginal oil fields. Thus, there is a need for simple mobile production solutions making possible an economic exploitation also of smaller oil fields, especially with little gas, and with a production rate of up to 5000 m³ oil per day.

Thus, it is a main object of the invention to provide a system for use in offshore oil and gas production which makes possible an efficient and economic exploitation of e.g. smaller or marginal oil fields, the inherent advantages of the introductorily stated buoy loading system being utilized and retained.

The above-mentioned object is achieved with a system of the introductorily stated type which, according to the invention, is characterised in that it comprises a swivel unit arranged at deck level of the vessel and comprising inner and outer mutually rotatable swivel members, the inner swivel member being rigidly connected to a holding cylinder extending downwards through the shaft and having a lower end arranged for non-rotatable connection with the central member of the buoy, and that the central member of the buoy is provided with a lead-through means for the topical number of transfer lines, so that these can be pulled up through the buoy and inside of the holding cylinder up to the swivel unit, these lines at their upper ends being arranged for connection with associated conduit connections which are connected through the swivel unit to a tube system on the vessel.

DE 3 344 116 does not disclose the combination of an inner and an outer swivel member, nor a two-part type of buoy, nor a separate central member.

A substantial advantage of the system according to the invention is that it gives reduced system dimensions because of the utilization of the special buoy which itself constitutes a turning body. This results in weight saving and a reduced equipment volume, which gives substantially reduced costs.

The system according to the invention requires minimum rebuilding of shuttle tankers for the introductorily stated buoy loading system, for transition to production vessels. With such a production vessel seasonal operations will be possible, in addition to continuous production from marginal fields, and also test production. The vessel for example may be used for test production during the summer half in a period with a possible excess of shuttle tankers.

In connection with, or in addition to the above-mentioned fields of use, the system according to the invention will be suitable for use in connection with water injection, water purification plants, well stimulation, pumping of oil from ship wrecks located on the sea bed, etc. The system also is suitable for use in waters having floating ice and icebergs, the system when required making possible a quick disconnection, without any risk for damage of the submerged buoy.

The invention will be further described below in connection with exemplary embodiments with reference to the drawings; wherein
Fig. 1 shows a view of a vessel and a submerged buoy forming part of the system according to the invention;
Fig. 2 corresponds to Fig. 1, but shows the buoy raised and introduced in the receiving space of the vessel;
Fig. 3 is a schematic sectional view illustrating an embodiment of the total system according to the invention;
Figs. 4-6 show different stages during installation of the system;
Fig. 7 is a schematic sectional view illustrating release of riser couplings in the system;
Fig. 8 is a schematic sectional view corresponding to Fig. 3, but showing an advantageous embodiment in connection with the buoy's lead-through arrangement for transfer lines;
Fig. 9 shows a partial section along the line IX-IX in Fig. 8;
Fig. 10 shows an enlarged view of the detail B in Fig. 8;
Fig. 11 shows the system in Fig. 8 during pulling-up of transfer lines;
Fig. 12 shows a schematic sectional view of the buoy in the embodiment according to Fig. 8 in disconnected condition; and
Fig. 13 shows embodiments of locking and sealing means in the receiving space of the vessel.

Corresponding members and elements are designated by the same reference numerals in the different drawing Figures.

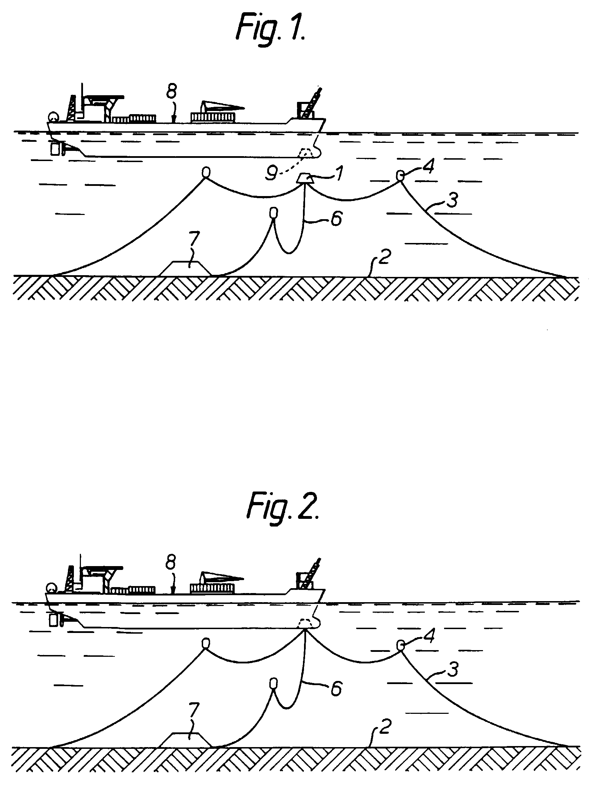

In Fig. 1 there is shown a submerged buoy 1 which is anchored to the sea or ocean bed 2 by means of a suitable mooring system consisting of a number of anchor lines 3 and floating bodies 4, so that the buoy floats at a predetermined desired depth below the water surface 5, the buoyancy of the buoy then being in equilibrium with the weight of the mooring system. A flexible transfer line 6 extends between the buoy 1 and a production well 7 at the sea bed. Even if only one line 6 is shown, there may in practice be arranged several lines in the form of one or more flexible risers (for production, injection, etc.) and an associated umbilical cable.

A vessel 8 in its bow portion is provided with a receiving space 9 and is brought into position with the receiving space located above the buoy 1. The vessel may be a shuttle tanker which is equipped as a production vessel and which for this purpose will be provided with a modularized, deck-mounted processing plant and a burner means ("flare"). In preparation for production the buoy 1 is hoisted up and fastened in the receiving space 9, as shown in Fig. 2.

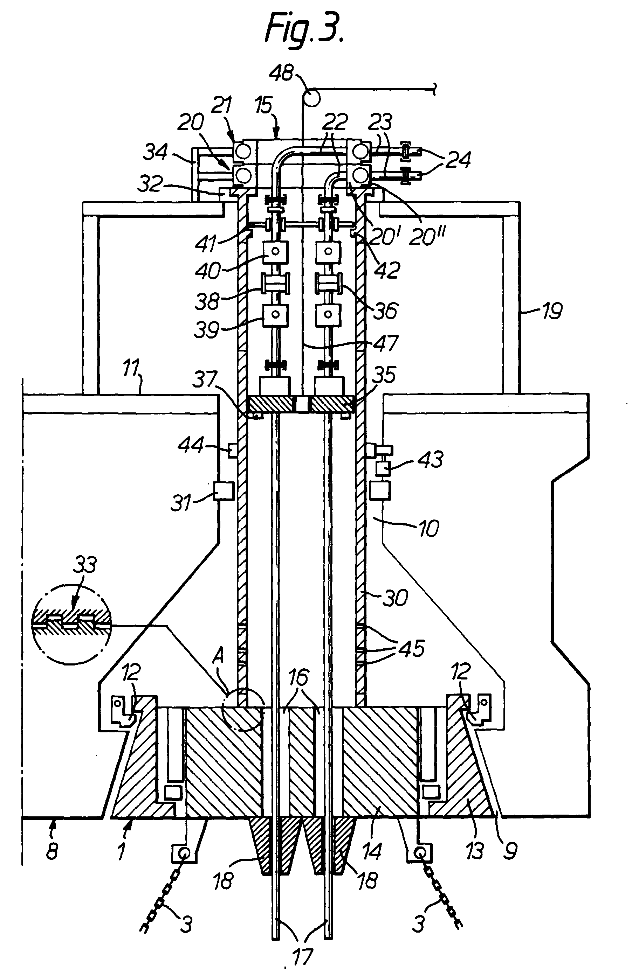

A schematic sectional view of an embodiment of the system according to the invention is shown in Fig. 3 which shows the constituent parts quite schematically, and without correct relative proportions. The system may be installed in a suitably modified shuttle tanker of the implementation shown in the aforementioned international patent application No. PCT/NO92/00055, and thus be installed in the bow portion of such a vessel, as suggested in the Figure.

The vessel 8 includes a submerged receiving space 9 and a shaft 10 extending between the receiving space and the deck 11 of the vessel. A buoy 1 is introduced in the receiving space 9 and mechanically locked by locking means 12. The buoy comprises an outer buoyancy member 13 which is arranged for releasable locking in the receiving space by means of the locking means 12, and a central member 14 which is rotatably mounted in the outer member 13 and is anchored to the sea bed by means of the anchor lines 3. The fundamental construction and manner of operation of the buoy in essential features corresponds to what is disclosed in the aforementioned international patent application No. PCT/NO92/00056, and reference is made to this application for a further description of the general buoy structure.

In the present system the buoy is, however, modified in relation to the buoy according to the prior application, the flexible transfer lines extending between the buoy and the production well at the sea bed in the present case being brought directly through the central member of the buoy, in order to be pulled up to the region of a swivel unit 15 arranged at the deck of the vessel. In the embodiment shown in Fig. 3 the central member 14 of the buoy is provided with a pair of lead-through passages 16 for penetration of a pair of flexible risers 17, the buoy at the underside being provided with buoy stiffeners 18 at the outlet of the lead-through passages. In practice the buoy may be provided with a number of lead-through passages corresponding to the topical number of transfer lines, e.g. one riser for production, one riser for injection, an umbilical cable for hydraulic and signal lines, etc.

The swivel unit 15 arranged at deck level, and more specifically on a superstructure 19, consists of a stack of swivels of a suitable type for the topical production case. In the Figure there is shown a pair of high pressure production swivels 20 and 21, whereas in practice there will normally also be provided a hydraulic swivel and a service line swivel. The shown swivels are of conventional construction, and each consists of inner and outer mutually rotatable swivel members defining an annulus therebetween, the inner swivel member having a tube connection communicating with the annulus and with a coupling unit for connection to an associated transfer line from the buoy, and the outer swivel member having a tube connection communicating with the annulus and with a tube system leading to the process plant of the vessel. In Fig. 3, the swivel members of the swivel 20 are designated 20' and 20'', both tube connections of the inner swivel members are designated 22, the tube connections of the outer swivel members are designated 23, and the tubes leading to the processing plant (not shown) of the vessel are designated 24.

An essential part of the system according to the invention is a holding cylinder 30 extending through the shaft 10 and being non-rotatably connected between the inner member of the swivel unit 15 and the inner or central member 14 of the buoy. This cylinder has as its main task to keep the inner member of the swivel unit 15 stationary relative to the central member 14 of the submerged buoy. The cylinder is supported radially by means of a radial bearing 31, and axially by means of an axial bearing 32 placed under the swivel unit 15. The upper end of the cylinder is fastened, e.g. bolted, to the inner swivel member 20', and its lower end is non-rotatably connected to the central buoy member 14 through a cogging 33 shown in connection with the detail A in Fig. 3. In operation the central buoy member 14 is kept in position by the anchor lines 3, and the holding cylinder 30 keeps the inner swivel member stationary relative to the central buoy member, said cogging absorbing the torque transferred to the holding cylinder - because of friction in the swivel unit - when the outer swivel member is turned with turning of the vessel.

A drive mechanism 34 to cause the outer member of the swivel unit to turn with the vessel is shown to be arranged next to the swivel unit 15.

The flexible risers which are carried through the buoy 1, is carried internally of the holding cylinder 30, the risers with their upper end portions being carried through and fastened to a collar 35 which is slidable along the inner wall of the cylinder 30. In Fig. 3 the collar is shown in its operating position wherein the risers are connected to the tube connections 22 of the swivel unit 15 through a coupling unit which on the whole is designated by the reference numeral 36. The collar 35 is in the form of a plate which is suitably perforated (in a manner not further shown), to obtain an optimal braking of the downward movement of the collar in sea water in the lower part of the holding cylinder 30 when disconnecting the buoy 1 from the vessel, as described later, in order to get a minimized shock load from the collar against the buoy. The collar is also shown to be provided with damping springs 37 at the underside, to minimize the shock load.

The coupling unit 36 i.a. is shown to comprise a quick release coupling 38 for each line connection, and in addition valves 39, 40, which possibly may be automatic shut off valves, are provided above as well as under the quick release coupling, in order to limit spill of hydrocarbons and make possible a disconnection when the tubes are under pressure. Further, in connection with the coupling unit 36, there is provided a hang-off collar 41 by means of which the coupling unit may be suspended in the holding cylinder by means of a projection means 42 on the inner wall of the cylinder 30.

When installing the system, it will be necessary to turn the holding cylinder 30 so that its lower cogging 33 matches into the cogging of the central member 14 of the buoy, when the buoy is locked in the receiving space 9. For this purpose there is provided an electric motor 41 in combination with a gear rim 44 on the cylinder.

In order to damp pressure shocks in the cylinder 30 when disconnecting the buoy and the flexible risers, the lower part of the cylinder is provided with suitable perforations 45. At the level of the quick release couplings 38 the cylinder advantageously is provided with openings (not shown) for access and natural ventilation.

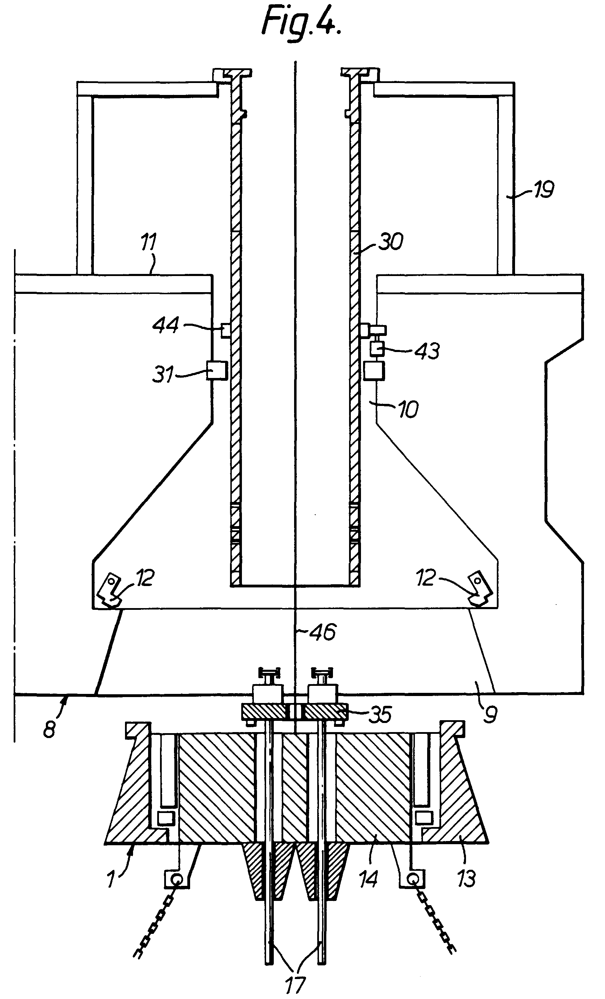

Different stages in installation of the system according to the invention will be described below with reference to Figs. 4-6.

As an introductory operation, the buoy 1 is pulled into the receiving space 9 of the vessel, a pull-in line 46 attached to the buoy (see Fig. 4) being pulled in by means of a winch device (not shown) on the vessel 8. The pull-in procedure may be carried out as described in the international patent application No. PCT/NO92/00053. When the buoy has been pulled in, the holding cylinder 30 is turned by means of the motor 43 until the lower cogging 33 of the cylinder matches with the corresponding cogging on the buoy (see Fig. 3). A video camera (not shown) which is used for the pull-in and locking operation, will give information as to how the holding cylinder 30 has to be turned in order for the cogging 33 to be thrown into mesh. Thereafter the buoy is locked in place by the locking means 12, and the non-rotatable connection between the buoy and the holding cylinder is established. The lower part of the shaft 10 and the cylinder 30 now will be filled with water, up to a level corresponding to the draught of the vessel. This water quantity may remain in the shaft, or it can - if desired - be removed by means of suitable pumping equipment, provided that the buoy forms a sealing connection with the receiving space.

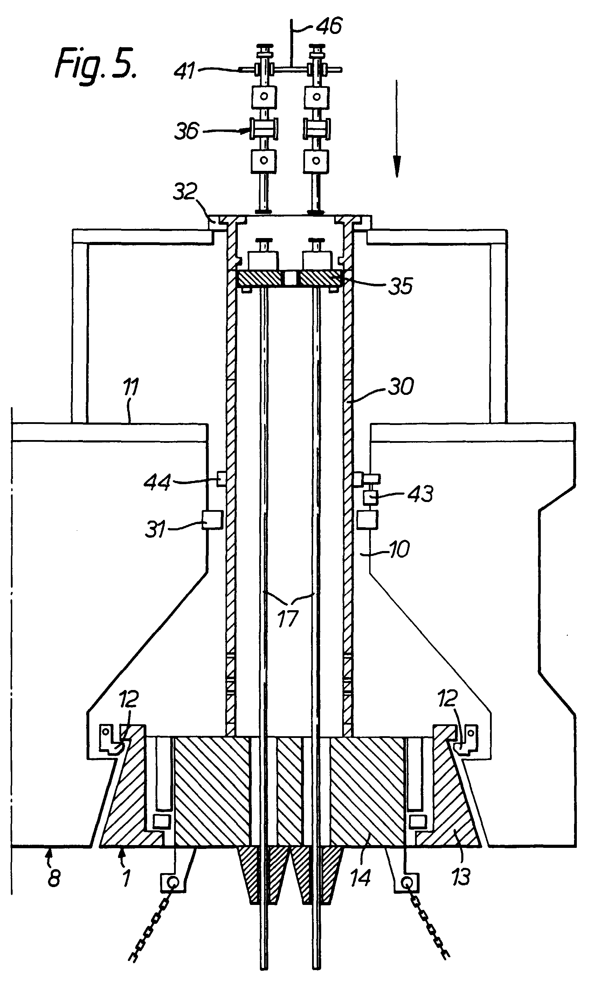

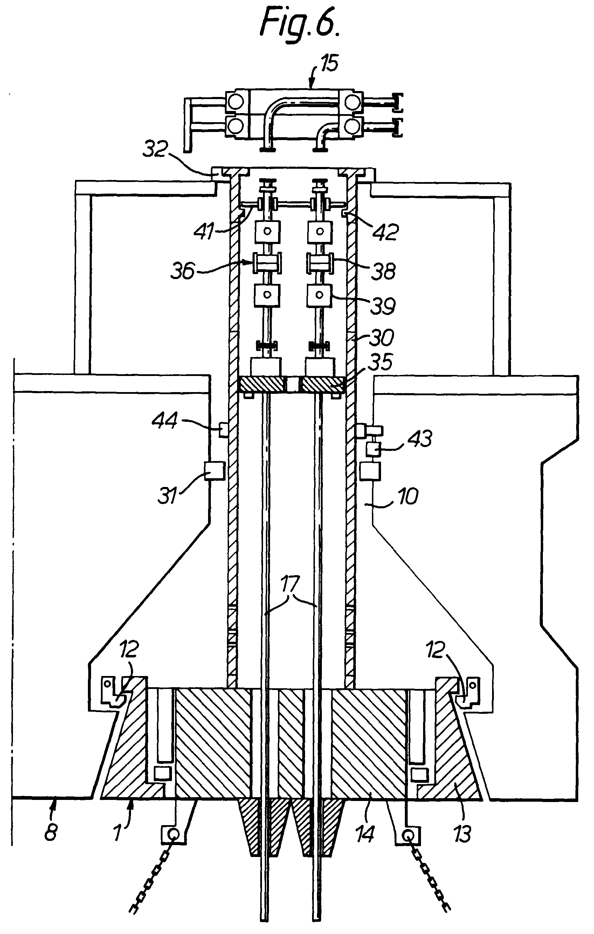

When the buoy is locked in the receiving space, the pull-in line 46 is disengaged from the central member 14 of the buoy by means of a drop weight, so that the fastening for this line is transferred to the collar 35. Thereafter the collar 35 with the risers 17 are pulled up through the holding cylinder 30 by means of the pull-in line 46, up to the upper end of the cylinder on a level with the axial bearing 32 of the cylinder, where the collar is locked axially by a suitable means, in the position shown in Fig. 5. The pull-in line 46 thereafter is loosened from the collar 35 and instead affixed to the hang-off collar 41 of the coupling unit 36, and the coupling unit thereafter is hoisted in place and lowered above the collar 35, whereafter it is mounted to the end terminations of the risers 17. Thereafter the axial locking of the collar 35 is released, and the risers 17 and the coupling unit 36 are lowered so much that the hang-off collar 41 comes to rest against the projection means 42 on the inner wall of the holding cylinder. The situation then is as shown in Fig. 6.

The next operation is to assemble the swivel unit 15 with associated tube connections and the drive mechanism 34 at the top of the axial bearing for the holding cylinder. When the swivel unit is lowered in place, the tube connections 22 are flanged to the top of the tubes from the quick release couplings 38, and the tube connections 23 are connected to the tubes 24.

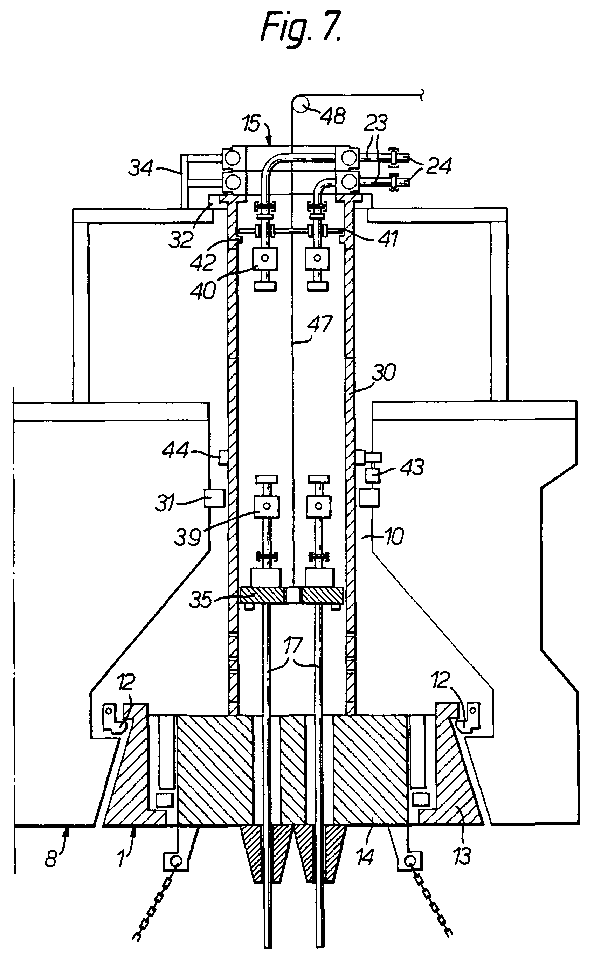

When the buoy and the associated risers are to be disconnected from the vessel, this takes place sequentially, as illustrated in Fig. 7. Firstly, the quick release couplings 38 are released, possibly after the valves 39 and 40 firstly having been shut off, if these are not automatic shut off valves. As shown in Fig. 7, a holding line 47 is fixed to the collar 35, which line goes via a pulley 48 to a winch (not shown) having a constant braking moment. This is done in order to avoid compression and deflection of the flexible risers 17 under the weight of the collar and the disengaged elements resting thereon after release of the quick release couplings. The perforated collar 35 with the risers then is lowered in a controlled manner to the water surface, whereafter it is braked by the water in the holding cylinder 30, so that it becomes lying at the top of the buoy, without any shock loading of importance. The locking means 12 for locking of the buoy are released with a time delay which is sufficient for the collar 35 to rest on the buoy when release takes place. When the buoy is disengaged, it sinks down clear of the vessel, because of its weight and the pulling forces from the mooring and riser systems.

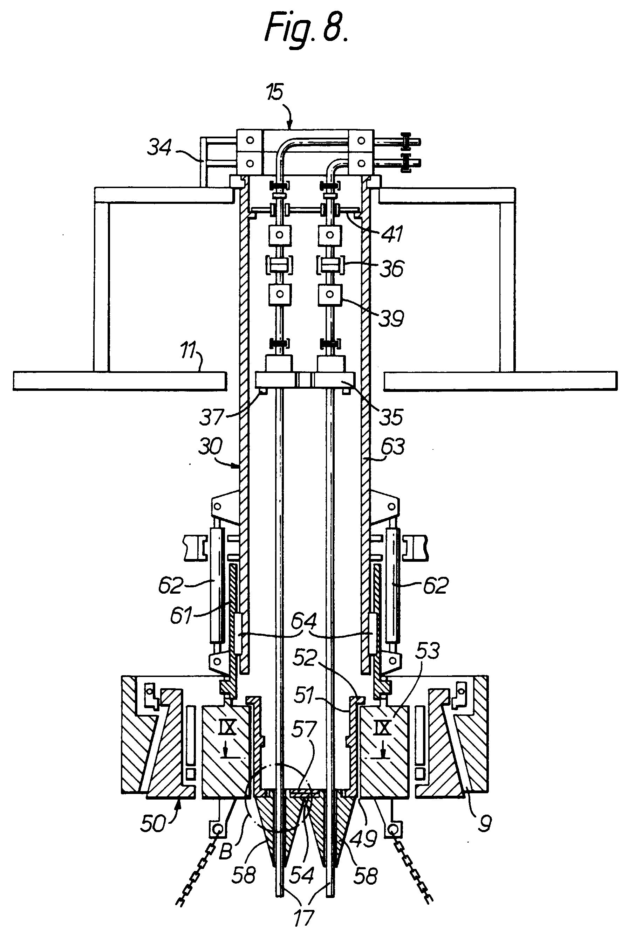

Figs. 8-12 show another embodiment of the system according to the invention, and especially an advantageous embodiment with respect to the buoy's lead-through means for transfer lines which also here are in the form of flexible risers.

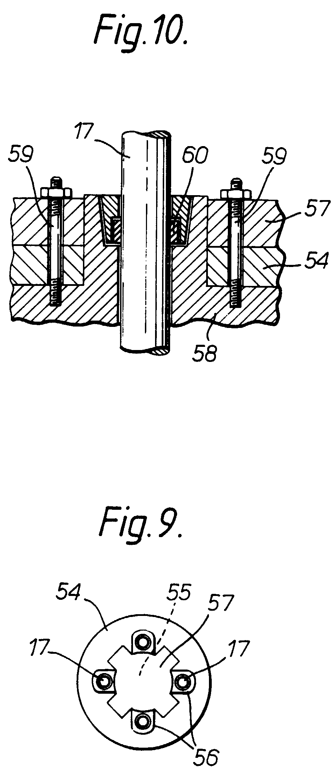

As appears from Fig. 8, the schematically shown buoy 50 here comprises an inner cylinder 51 which by means of an outwardly projecting collar 52 is suspended in a central passage 49 in the central member 53 of the buoy. The cylinder 51 has a bottom 54 which is provided with a central opening 55 and with a number of recesses 56 extending radially outwardly from the opening 55 and being intended for reception of respective risers 17 (see Fig. 9). The central opening 55 is covered by a lid 57 which is fixed to the bottom of the cylinder 51 by means of a suitable bolting arrangement.

The risers 17 at the bottom of the buoy are surrounded by buoy stiffeners 58 which are fastened to the bottom 54 of the cylinder 51 and the lid 57 by means of suitable bolts 59, as shown in the enlarged segment in Fig. 10 (the detail B in Fig. 8). The risers 17 are surrounded by gaskets 60 to prevent ingress of sea water around the risers and the buoy stiffeners.

As will be seen, the inner cylinder 51 may be lifted up from or lowered into the central member 53 of the buoy 50. Thus, the inner cylinder may be pulled up from the buoy when this is introduced into and secured in the receiving space 9 of the topical vessel, so that one may carry out dry bolting of the buoy stiffeners 58 to the bottom of the inner cylinder and assembly of the gasket means around the risers. The central opening 55 in the bottom of the cylinder makes possible a pulling-up of riser end terminations with a larger transverse dimension than the recesses 56.

In order to provide space for pulling-up of the inner cylinder 51, the lower end of the holding cylinder 30 is provided with a telescopically displaceable cylinder part 61 which, in the illustrated embodiment, can be raised and lowered by means of hydraulic cylinders 62. The cylinder part 61 possibly may be connected to the inner cylinder 51 for lifting and lowering thereof. Further, between the telescopically displaceable cylinder part 61 and the fixed part 63 of the holding cylinder 30, there are provided axial guides 64 for the transfer of torque from the swivel unit 15 to the buoy 50 (introduced by the radial bearing of the holding cylinder 30 and the swivel).

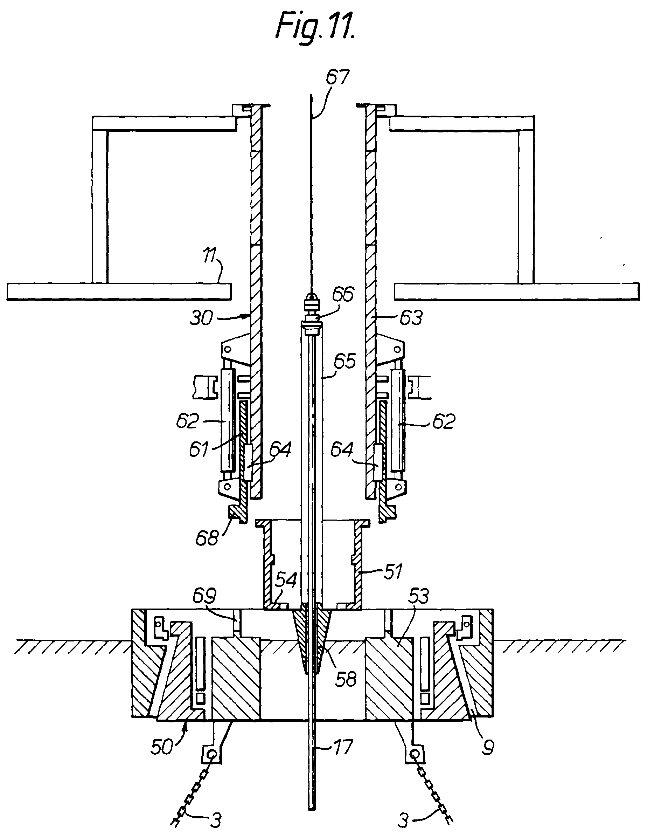

Pulling-up and installation of flexible risers will be described with reference to Fig. 11.

During this operation the vessel in question is ballasted so much that the water line level is located somewhat below the top of the conical receiving space 9. The inner cylinder 51 and the telescopic part 61 of the holding cylinder are pulled up so much that the bottom of the inner cylinder is located on a level with the upper edge of the central member 53 of the buoy. A riser 17 with an associated buoy stiffener 58, which by means of steel ropes 65 is fastened to an end termination 66, is pulled into the holding cylinder 30 by means of a pull-in line 67 and a winch (not shown) at deck level. When the buoy stiffener flange is on a level with the lower edge of the bottom 54 of the inner cylinder 51, the riser 17 is pulled out into one of the recesses 56 in the bottom and locked in this position. The flexible risers are pulled in by turns. The lid 57 thereafter is bolted over the central opening of the bottom, and the buoy stiffeners 58 are bolted to the lid and the bottom of the inner cylinder. The inner cylinder 51 and the telescopic part 61 are lowered down, and the inner cylinder is hung off on the central member 53 of the buoy. A cogging 68 at the lower end of the telescopic part 61 is meshed with the corresponding cogging 69 on the central member 53 of the buoy.

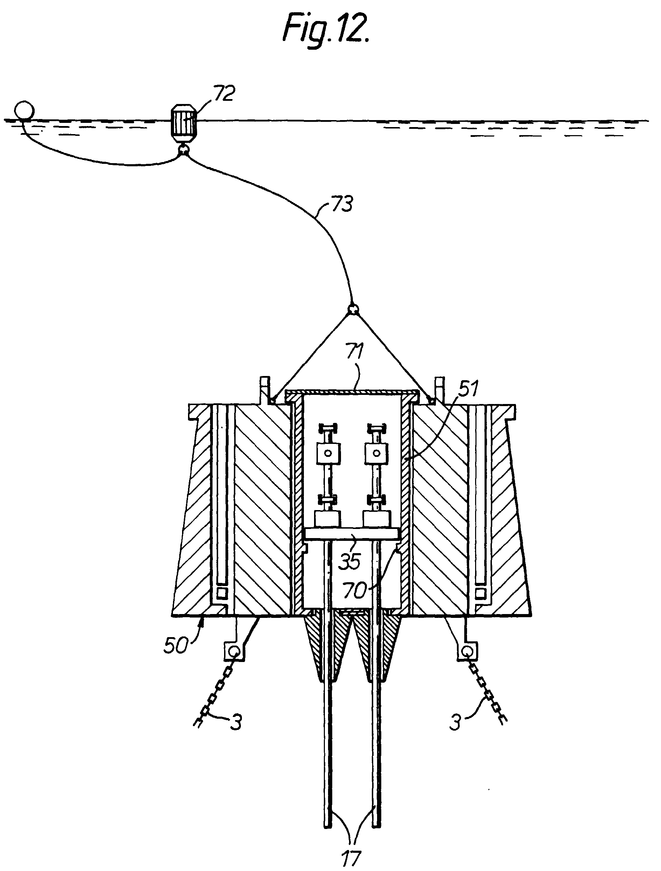

Disconnection of the buoy 50 with associated risers 17 and anchor lines 3 will be described with reference to Fig. 12.

When disconnecting the buoy, the riser couplings 36 (see Fig. 3) are released, and the risers 17 together with the riser-enclosing collar 35 and the associated part of the riser couplings are lowered down until the collar 35 is hung off on the inner collar 70 arranged on the inner wall of the inner cylinder 51. For the lowering there is used a winch (not shown) which is placed at the deck of the vessel, the holding line (not shown) of the vessel being fastened to the collar 35. The winch is controlled by a PLS control unit providing for a controlled lowering. A shutter 71 is bolted to the top of the inner cylinder 51 for i.a. protecting the gasket surfaces and valves of the riser couplings.

As shown in Fig. 12, the submerged buoy 50 with risers and anchor system may be located by means of a floating buoy 72 which is connected to the buoy 50 via a line 73, for coupling to the vessel of interest. Disconnection of the buoy 50 may e.g. take place in connection with classification of the vessel.

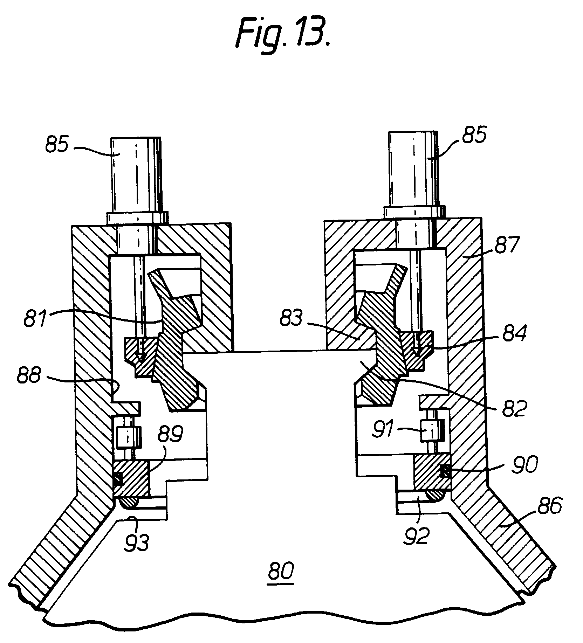

An embodiment of the device for releasable fastening of the buoy in the receiving space of the vessel is shown in Fig. 13. The illustrated device comprises a number of locking segments 81 for connecting an upper collar member 82 of the buoy to a downwards projecting, mating collar member 83 arranged around the upper opening of the receiving space of the vessel, and a locking ring 84 surrounding the segments 81 and being raisable and lowerable by means of hydraulic jacks or cylinders 85. As shown, the segments 81 are supported by the collar member 83 of the receiving space and are designed for cooperation with the locking ring 84, so as to be brought to their locking position with lowering of the locking ring 84, and to a release position with raising of the locking ring. As appears from the Figure, said collar members 82, 83 are shaped with conical surfaces to which the locking segments 81 are adapted, and the segments and the locking ring further are shaped with surfaces which are self-locking. In addition, the hydraulic cylinders 85 have locking of their piston rods, so that a double locking is obtained.

The receiving space in Fig. 13 is shown to include a lower conical part 86 and an upper cylindrical part 87 having a cylindrical inner wall 88. In the lower portion of the cylindrical inner wall 88 there is arranged an axially displaceable ring 89 which is in sealing abutment against the inner wall of the receiving space by means of a sealing ring 90, and which may be displaced along the inner wall by means of suitable actuators 91, e.g. hydraulic cylinders. At its underside the ring 89 is provided with an additional sealing ring or gasket 92 which, with displacement of the ring 89, can be brought into sealing engagement with a corresponding sealing surface 93 on the outer member of the buoy. In this manner one obtains a safe sealing against leakage of sea water between the buoy and the inner wall of the receiving space.

## Claims

1. A system for use in offshore oil and gas production from production wells on the sea bed, comprising a submerged buoy (1) having an outer buoyancy member (13) which is arranged for introduction and releasable fastening in a submerged, downwardly open receiving space (9) in a vessel (8), and a central member (14) which is rotatably mounted in the outer member (13) and is anchored to the sea bed (2) and is connected to at least one transfer line (6) extending from a respective production well (7) up to the buoy (1), a shaft (10) extending between the receiving space (9) and the deck (11) of the vessel (8), **CHARACTERIZED IN** that it comprises a swivel unit (15) arranged at deck level of the vessel (8) and comprising inner and outer mutually rotatable swivel members (20', 20'') the inner swivel member being rigidly connected to a holding cylinder (30) extending downwards through the shaft (10) and having a lower end arranged for non-rotatable connection with the central member (14) of the buoy (1), and that the central member (14) of the buoy is provided with a lead-through means (16) for the topical number of transfer lines (17), so that these can be pulled up through the buoy and inside of the holding cylinder (30) up to the swivel unit (15), these lines (17) at their upper ends being arranged for connection with associated conduit connections (22) which are connected through the swivel unit (15) to a tube system (24) on the vessel (8).

2. A system according to claim 1, **CHARACTERIZED IN** that the upper end portions of the transfer lines (17) are carried through and fastened to a collar (35) which is slidable along the inner wall of the holding cylinder (30).

3. A system according to claim 2, **CHARACTERIZED IN** that the collar (35) consists of a plate which is perforated for suitable braking of the downward movement of the collar in sea water in the holding cylinder (30) in case of disconnection of the buoy (1) from the vessel (8).

4. A system according to claim 2 or 3, **CHARACTERIZED IN** that damping springs (37) are arranged at the underside of the collar (35).

5. A system according to any of the claims 2-4, **CHARACTERIZED IN** that the central member (14) of the buoy is provided with a means allowing automatic release of a pull-in line (46) for the buoy (1) by means of a drop weight, so that the fastening for the line (46) is transferred to the collar (35).

6. A system according to any of the claims 2-5, **CHARACTERIZED IN** that the transfer lines (17) and the associated line connections (22) of the swivel unit (15) are interconnected by means of quick release couplings (38).

7. A system according to claim 6, **CHARACTERIZED IN** that automatic shut off valves (39, 40) are arranged on the transfer lines (17) above and below the quick release couplings (38).

8. A system according to any of the preceding claims, **CHARACTERIZED IN** that the holding cylinder (30) is supported by means of a lower radial bearing (31) and an upper axial bearing (32).

9. A system according to any of the preceding claims, **CHARACTERIZED IN** that the wall of the holding cylinder (30) is perforated (45) at the lower end of the cylinder.

10. A system according to any of the preceding claims, **CHARACTERIZED IN** that the lower end of the holding cylinder (30) is rigidly connected to the central member (14) of the buoy (1) through a cogging (33).

11. A system according to any of the preceding claims, **CHARACTERIZED IN** that the lead-through means of the buoy comprises an inner cylinder which is arranged to be suspended in a central passage in the central member of the buoy, and to be lifted from or lowered into the central member, the cylinder having a bottom which is provided with a central opening and with radial recesses from the opening, for reception of respective transfer lines.

12. A system according to claim 11, **CHARACTERIZED IN** that the top of the receiving space (9) of the vessel is arranged with such a height that, with suitable ballasting of the vessel (8), it will be located above the still water level, to enable dry installation of transfer lines (17) with lifted inner cylinder (51).

13. A system according to claim 11 or 12, **CHARACTERIZED IN** that the transfer lines are carried in a sealing manner through respective buoy stiffeners which are adapted to be fastened to the bottom of the inner cylinder in the associated recesses, and to a lid covering the central opening of the bottom.

14. A system according to claim 11, 12 or 13, **CHARACTERIZED IN** that the lower end of the holding cylinder comprises a telescopically displaceable cylinder part which may be raised and lowered by means of hydraulic cylinders, and which can be connected to the inner cylinder of the buoy for raising and lowering thereof.

15. A system according to claim 14, **CHARACTERIZED IN** that axial guides for transfer of torque from the swivel unit to the buoy are arranged between the telescopically displaceable part and the fixed part of the holding cylinder.

16. A system according to claim 2 and one of the claims 11-15, **CHARACTERIZED IN** that the inner cylinder is provided with an inner collar for support of the transfer-line enclosing collar in case of disconnection of the transfer lines from the swivel unit.

17. A system according to any of the preceding claims, **CHARACTERIZED IN** that a device for the releasable fastening of the buoy in the receiving space of the vessel comprises a number of locking segments for connection of an upper collar member of the buoy to a downwards projecting, mating collar member arranged at the upper opening of the receiving space, and a locking ring enclosing the segments and being raisable and lowerable by means of hydraulic cylinders, the segments being supported by the downwards projecting collar member and being shaped for cooperation with the locking ring, so as to be brought to their locking position with lowering of the locking ring, and to a release position with raising of the locking ring.

18. A system according to any of the preceding claims, **CHARACTERIZED IN** that an upper part of the receiving space has a cylindrical inner wall, and that in the lower portion of the cylindrical inner wall, there is arranged an axially displaceable ring which is in sealing abutment against the inner wall and at its underside is provided with a sealing ring for sealing engagement with a corresponding sealing surface on the outer member of the buoy.

## Patentansprüche

1. System zur Verwendung bei Öl- und Gasproduktion auf See aus Produktionsbohrlöchern auf dem Meeresboden, das einen untergetauchten Schwimmkörper (1) mit einem äußeren Auftriebselement (13), der für Einführung und lösbare Befestigung in einem untergetauchten, nach unten geöffneten Aufnahmeraum (9) in einem Schiff (8) angeordnet ist, und ein zentrales Element (14) umfaßt, das drehbar in dem äußeren Element (13) angebracht ist und im Meeresboden (2) verankert ist und mit wenigstens einer Übertragungsleitung (6) verbunden ist, die sich von einem jeweiligen Produktionsbohrloch (7) nach oben zu dem Schwimmkörper (1) erstreckt, wobei eine Welle (10) zwischen dem Aufnahmeraum (9) und dem Deck (11) des Schiffs (8) verläuft, dadurch gekennzeichnet, daß es eine Dreheinheit (15) aufweist, die auf Deckhöhe des Schiffs (8) angeordnet ist und innere und äußere gegenseitig drehbare Drehelemente (20', 20'') aufweist, wobei das innere Drehelement starr mit einem Haltezylinder (30) verbunden ist, der sich durch die Welle (10) nach unten erstreckt und ein unteres Ende aufweist, welches für nicht drehbare Verbindung mit dem mittleren Element (14) des Schwimmkörpers (1) angeordnet ist, und daß das mittlere Element (14) des Schwimmkörpers mit einem Durchführungsmittel (16) für die aktuelle Anzahl von Übertragungsleitungen (17) versehen ist, so daß diese durch den Schwimmkörper und innerhalb des Haltezylinders (30) nach oben zu der Dreheinheit (15) hochgezogen werden können, wobei diese Leitungen (17) an ihren oberen Enden für Verbindung mit zugeordneten Leitungsverbindungen (22) ausgeführt sind, die durch die Dreheinheit (15) an ein Rohrsystem (24) des Schiffs (8) angeschlossen sind.

2. System nach Anspruch 1, dadurch gekennzeichnet, daß die oberen Endteile der Übertragungsleitungen (17) durch einen Kragen (35) getragen und an demselben befestigt sind, der entlang der Innenwand des Haltezylinders (30) verschiebbar ist.

3. System nach Anspruch 2, dadurch gekennzeichnet, daß der Kragen (35) aus einer Platte besteht, die für geeignetes Bremsen der Abwärtsbewegung des Kragens in Seewasser in dem Haltezylinder (30) im Falle von Entkopplung des Schwimmkörpers (1) von dem Schiff (8) perforiert ist.

4. System nach Anspruch 2 oder 3, dadurch gekennzeichnet, daß Entlastungsfedern (37) an der Unterseite des Kragens (35) angeordnet sind.

5. System nach einem der Ansprüche 2-4, dadurch gekennzeichnet, daß das mittlere Element (14) des Schwimmkörpers mit einem Mittel versehen ist, das automatische Freigabe einer Einzugsleitung (46) für den Schwimmkörper (1) mittels eines Fallgewichts ermöglicht, so daß die Befestigung für die Leitung (46) an den Kragen (35) übertragen wird.

6. System nach einem der Ansprüche 2-5, dadurch gekennzeichnet, daß die Übertragungsleitungen (17) und die zugeordneten Leitungsverbindungen (22) der Dreheinheit (15) mittels Reißkupplungen (38) miteinander verbunden sind.

7. System nach Anspruch 6, dadurch gekennzeichnet, daß automatische Absperrventile (39, 40) an den Übertragungsleitungen (17) über und unter den Reißkupplungen (38) vorgesehen sind.

8. System nach einem der vorhergehenden Ansprüche, dadurch gekennzeichnet, daß der Haltezylinder (30) mittels eines unteren Querlagers (31) und eines oberen Axiallagers (32) gehalten wird.

9. System nach einem der vorhergehenden Ansprüche, dadurch gekennzeichnet, daß die Wand des Haltezylinders (30) am unteren Ende des Zylinders perforiert (45) ist.

10. System nach einem der vorhergehenden Ansprüche, dadurch gekennzeichnet, daß das untere Ende des Haltezylinders (30) durch eine Verzahnung (33) starr mit dem mittleren Element (14) des Schwimmkörpers (1) verbunden ist.

11. System nach einem der vorhergehenden Ansprüche, dadurch gekennzeichnet, daß das Durchführungsmittel des Schwimmkörpers einen inneren Zylinders aufweist, der ausgeführt ist, um in einem mittleren Durchgang in dem mittleren Element des Schwimmkörpers aufgehängt zu werden, und um aus dem mittleren Element herausgehoben oder in es abgesenkt zu werden, wobei der Zylinder einen Boden aufweist, der mit einer mittigen Öffnung und mit radialen Aussparungen von der Öffnung für Aufnahme jeweiliger Übertragungsleitungen versehen ist.

12. System nach Anspruch 11, dadurch gekennzeichnet, daß der obere Teil des Aufnahmeraums (9) des Schiffs mit einer solchen Höhe ausgeführt ist, daß es, bei geeigneter Lastbeladung des Schiffs (8), über der stillen Wasseroberfläche angeordnet sein wird, um trockene Installierung von Übertragungsleitungen (17) bei angehobenem innerem Zylinder (51) zu ermöglichen.

13. System nach Anspruch 11 oder 12, dadurch gekennzeichnet, daß die Übertragungsleitungen in einer abdichtenden Weise durch entsprechende Schwimmkörperversteifer getragen werden, die ausgeführt sind, um am Boden des inneren Zylinders in den zugeordneten Aussparungen und an einem Deckel befestigt zu werden, der die mittige Öffnung des Bodens bedeckt.

14. System nach Anspruch 11, 12 oder 13, dadurch gekennzeichnet, daß das untere Ende des Haltezylinders einen teleskopartig verschiebbaren Zylinderteil aufweist, der mittels hydraulischer Zylinder angehoben und abgesenkt werden kann, und der mit dem inneren Zylinder des Schwimmkörpers zum Anheben und Absenken desselben verbunden werden kann.

15. System nach Anspruch 14, dadurch gekennzeichnet, daß die axialen Führungen für Übertragung von Drehkraft von der Dreheinheit an den Schwimmkörper zwischen dem teleskopartig verschiebbaren Teil und dem festen Teil des Haltezylinders angeordnet sind.

16. System nach Anspruch 2 und einem der Ansprüche 11-15, dadurch gekennzeichnet, daß der innere Zylinder mit einem inneren Kragen für Abstützung des Übertragungsleitungen umschließenden Kragens im Falle von Entkopplung der Übertragungsleitungen aus der Dreheinheit versehen ist.

17. System nach einem der vorhergehenden Ansprüche, dadurch gekennzeichnet, daß eine Einrichtung zum lösbaren Befestigen des Schwimmkörpers in dem Aufnahmeraums des Schiffs eine Anzahl von Verriegelungssegmenten für Verbindung eines oberen Kragenelements des Schwimmkörpers mit einem nach unten vorstehenden, entsprechenden Kragenelement, das an der oberen Öffnung des Aufnahmeraums angeordnet ist, und einen Verriegelungsring umfaßt, der die Segmente umschließt und mittels hydraulischer Zylinder angehoben und abgesenkt werden kann, wobei die Segmente durch das nach unten vorstehende Kragenelement gehalten werden und für Zusammenwirken mit dem Verriegelungsring so geformt sind, um bei Absenken des Verriegelungsrings in ihre Verriegelungsposition und bei Anheben des Verriegelungsrings in eine Freigabeposition gebracht zu werden.

18. System nach einem der vorhergehenden Ansprüche, dadurch gekennzeichnet, daß ein oberer Teil des Aufnahmeraums eine zylindrische Innenwand aufweist, und daß im unteren Teil der zylindrischen Innenwand ein axial verschiebbarer Ring angeordnet ist, der sich in abdichtender Anlage gegen die Innenwand befindet und an seiner Unterseite mit einem Dichtungsring für abdichtenden Eingriff mit einer entsprechenden Dichtungsfläche an dem äußeren Element des Schwimmkörpers versehen ist.

## Revendications

1. Système destiné à être utilisé dans la production de pétrole et de gaz en mer à partir de puits productifs au fond des mers, comprenant une bouée submergée (1) ayant un élément de flottaison externe (13) qui est disposé pour être introduit et fixé de manière détachable dans un espace de réception ouvert vers le bas, submergé (9) dans un navire (8), et un élément central (14) qui est monté de manière rotative dans l'élément externe (13) et est ancré au fond de la mer (2) et est connecté à au moins une conduite de transfert (6) s'étendant depuis un puits productif respectif (7) jusqu'à la bouée (1), un arbre (10) s'étendant entre l'espace de réception (9) et le pont (11) du navire (8), CARACTERISE EN CE QU'il comprend une unité pivotante (15) disposée au niveau du pont du navire (8) et comprenant des éléments pivotants mutuellement rotatifs interne et externe (20', 20''), l'élément pivotant interne étant connecté de manière rigide à un cylindre de retenue (30) s'étendant vers le bas à travers l'arbre (10) et ayant une extrémité intérieure disposée pour une connexion non rotative avec l'élément central (14) de la bouée (1), et en ce que l'élément central (14) de la bouée est muni d'un moyen de traversée (16) du nombre effectif de conduites de transfert (17), de telle sorte que celles-ci puissent être remontées à travers la bouée et à l'intérieur du cylindre de retenue (30) jusqu'à l'unité pivotante (15), ces conduites (17) étant disposées au niveau de leur extrémité supérieure en vue d'une connexion avec des connexions de dérivation associées (22) qui sont connectées à travers l'unité pivotante (15) à un système de tubes (24) sur le navire (8).

2. Système selon la revendication 1, CARACTERISE EN CE QUE les parties d'extrémités supérieures des conduites de transfert (17) sont acheminées à travers et fixées à un collier (35) qui coulisse le long de la paroi interne du cylindre de retenue (30).

3. Système selon la revendication 2, CARACTERISE EN CE QUE le collier (35) consiste en une plaque qui est perforée pour un freinage convenable du mouvement vers le bas du collier dans l'eau de mer dans le cylindre de retenue (30) en cas de déconnexion de la bouée (1) d'avec le navire (8).

4. Système selon la revendication 2 ou 3, CARACTERISE EN CE QUE des ressorts amortisseurs (37) sont disposés sur le dessous du collier (35).

5. Système selon l'une quelconque des revendications 2 à 4, CARACTERISE EN CE QUE l'élément central (14) de la bouée est muni d'un moyen permettant la libération automatique d'une conduite de tirage (46) de la bouée (1) au moyen d'une masse tombante, de telle sorte que la fixation de la conduite (46) soit transférée au collier

6. Système selon l'une quelconque des revendications 2 à 5, CARACTERISE EN CE QUE les conduites de transfert (17) et les connexions de conduites associées (22) de l'unité pivotante (15) sont interconnectées au moyen de raccords à déconnexion rapide (38).

7. Système selon la revendication 6, CARACTERISE EN CE QUE des vannes d'arrêt automatiques (39, 40) sont disposées sur les conduites de transfert (17) au-dessus et en dessous des raccords à déconnexion rapide (38).

8. Système selon l'une quelconque des revendications précédentes, CARACTERISE EN CE QUE le cylindre de retenue (30) est supporté au moyen d'un palier radial inférieur (31) et d'un palier axial supérieur (32).

9. Système selon l'une quelconque des revendications précédentes, CARACTERISE EN CE QUE la paroi du cylindre de retenue (30) est perforée (45) au niveau de l'extrémité inférieure du cylindre.

10. Système selon l'une quelconque des revendications précédentes, CARACTERISE EN CE QUE l'extrémité inférieure du cylindre de retenue (30) est connectée de manière rigide à l'élément central (14) de la bouée (1) par un assemblage crénelé (33).

11. Système selon l'une quelconque des revendications précédentes, CARACTERISE EN CE QUE le moyen de traversée de la bouée comprend un cylindre interne qui est disposé pour être suspendu dans un passage central dans l'élément central de la bouée, et pour être remonté à partir de l'élément central ou descendu dans l'élément central, le cylindre ayant un fond qui est muni d'une ouverture centrale et avec des évidements radiaux à partir de l'ouverture, pour la réception de conduites de transfert respectives.

12. Système selon la revendication 11, CARACTERISE EN CE QUE le haut de l'espace de réception (9) du navire est disposé avec une hauteur telle qu'avec un ballastage convenable du navire (8), il sera situé au-dessus du niveau en eau calme, afin de permettre une installation à sec des conduites de transfert (17) avec un cylindre interne relevé (51).

13. Système selon la revendication 11 ou 12, CARACTERISE EN CE QUE les conduites de transfert sont acheminées de manière étanche à travers des raidisseurs de bouée respectifs qui sont adaptés pour être fixés au fond du cylindre interne dans les évidements associés, et à un couvercle couvrant l'ouverture centrale du fond.

14. Système selon la revendication 11, 12 ou 13, CARACTERISE EN CE QUE l'extrémité inférieure du cylindre de retenue comprend une partie de cylindre déplaçable téléscopiquement qui peut être relevée et abaissée au moyen de cylindres hydrauliques, et qui peut être connectée au cylindre interne de la bouée pour relever et abaisser celle-ci.

15. Système selon la revendication 14, CARACTERISE EN CE QUE des guides axiaux pour le transfert du couple de l'unité pivotante à la bouée sont disposés entre la partie déplaçable téléscopiquement et la partie fixe du cylindre de retenue.

16. Système selon la revendication 2 et l'une des revendications 11 à 15, CARACTERISE EN CE QUE le cylindre interne est muni d'un collier interne pour le support du collier enfermant les conduites de transfert en cas de déconnexion des conduites de transfert d'avec l'unité pivotante.

17. Système selon l'une quelconque des revendications précédentes, CARACTERISE EN CE qu'un dispositif pour la fixation détachable de la bouée dans l'espace de réception du navire comprend un certain nombre de segments de verrouillage pour la connexion d'un élément de collier supérieur de la bouée à un élément de collier conjugué, saillant vers le bas, disposé au niveau de l'ouverture supérieure de l'espace de réception, et une bague de verrouillage enfermant les segments et pouvant être relevée et abaissée au moyen de cylindres hydrauliques, les segments étant supportés par l'élément de collier saillant vers le bas et étant conformés pour coopérer avec la bague de verrouillage, de manière à être placés dans leur position de verrouillage avec l'abaissement de la bague de verrouillage, et dans une position de libération avec la remontée de la bague de verrouillage.

18. Système selon l'une quelconque des revendications précédentes, CARACTERISE EN CE qu'une partie supérieure de l'espace de réception a une paroi interne cylindrique, et que dans la partie inférieure de la paroi interne cylindrique est disposée une bague axialement déplaçable qui jouxte de manière étanche la paroi interne et au niveau de son dessous est munie d'une bague d'étanchéité en vue d'un engagement étanche avec une surface d'étanchéité correspondante sur l'élément externe de la bouée.
